# EUROPEAN PATENT APPLICATION

(11) **EP 4 395 027 A1**
(43) Date of publication of application: **03.07.2024**
(21) Application number: 22307067.3
(22) Date of filing: 30.12.2022
(51) Int. Cl.: H01M 50/209, H01M 50/242, H01M 50/291, H01M 50/293

(54) **BATTERY MODULE AND METHOD FOR ASSEMBLING SUCH A BATTERY MODULE**

(71) Applicant: Automotive Cells Company SE, 92300 Levallois Perret (FR)
(72) Inventor: Choi, Hangjune, 33200 Bordeaux (FR); ORIGUCHI, Masato, 92300 Levallois-Perret (FR)
(74) Representative: Alatis

(57) **Abstract**

The invention relates to a battery module (2) comprising a cage (4) and a battery cell array (6) held within said cage (4), the battery cell array (6) comprising a plurality of battery cells (14, 14A, 14B) stacked along a longitudinal direction (A-A'), the cage (4) comprising two end plates (8) and two lateral plates (10) connecting said end plates (8) at both ends, the two end plates (8) enclosing the battery cell array (6) in the longitudinal direction (A-A'). At least one of the two end plates (8) is provided with an inner recess (21) on its inner face, said inner recess (21) facing the corresponding end battery cell (14A, 14B) and being configured to accommodate swelling of said end battery cell (14A, 14B).

## Description

### TECHNICAL FIELD OF THE INVENTION

The present invention relates to a battery module. It further relates to a method for assembling said battery module. Such a battery module typically comprises a cage and a battery cell array held within said cage.

### BACKGROUND ART

Battery modules comprising a cage and a battery cell array, held within said cage, are known in the art. The battery cell array of such battery modules typically comprises a plurality of prismatic battery cells stacked along a longitudinal direction and thereby forming a stack of battery cells, a plurality of thermal insulation pads inserted between the battery cells and separating the battery cells from each other in said longitudinal direction, and two electrical insulation sheets each arranged at a respective end of the stack of battery cells. The thermal pads provide electrical isolation between the battery cells while providing low thermal conductivity (or near adiabatic condition to the cells) and effectively absorbing the expansion of the battery cells thickness caused by swelling behaviour of the battery cells over the lifetime of the battery. The electrical insulation sheets provide electrical insulation of the battery cells enclosures (i.e. can and top cover of said enclosures) from the positive and negative poles of the battery module, and thus avoid corrosion and risks of short circuits within the battery module.

The cage comprises two end plates and two lateral plates connecting said end plates at both ends. The battery cells, the thermal insulation pads and the electrical insulation sheets of the battery cell array are stacked. The two end plates of the cage cover both ends of said battery cell array. In this way, the two end plates enclose the battery cell array in the longitudinal direction, each of the end plates covering a respective electrical insulation sheet. Each thermal insulation pad is composed of a material deformable by compression. The two end plates get pushed to each other and their distance fixed by the lateral plates, so that the thermal insulation pads are compressed, and the battery cells are maintained between the two end plates by this compressive force.

However, the holding force applied onto the battery cells in such a configuration is not strong enough to resist the impulsive forces or impacts caused by the test conditions on the battery module, for example a side pole crash. Indeed, said holding force is dependent on the compressive force and the friction coefficient between the thermal insulation pads and the battery cells. On the other hand, at the module assembly stage, the thermal insulation pads need to reserve sufficient compression margin (i.e. free space) in their thickness to absorb the expansion of the battery cells thickness caused by swelling behaviour over the lifetime of the battery cells. The initial compression force should therefore be limited so as to avoid compressing the thermal insulation pads too thin, which tends to lead to insufficient module strength margin and excessive cell holding force in case of too high initial compression force.

A need therefore exists for a battery module which increases the resistance of the module to external forces or impacts.

### SUMMARY OF THE INVENTION

The object of the present invention is therefore to overcome the drawbacks of the prior art by providing a battery module which enhances the battery cells holding force and the resistant force, so as to prevent slippage between the stacked surfaces of the battery module components, while allowing absorption of the expansion of the battery cells thickness over its lifetime.

According to a first aspect of the invention, there is provided a battery module comprising a cage and a battery cell array held within said cage, the battery cell array comprising a plurality of battery cells stacked along a longitudinal direction and thereby forming a stack of battery cells, the cage comprising two end plates and two lateral plates connecting the end plates at both ends, the two end plates enclosing the battery cell array in the longitudinal direction, at least one of said two end plates being provided with an inner recess on its inner face, said inner recess facing the corresponding end battery cell and being configured to accommodate swelling of said end battery cell.

Such an inner recess enables accommodation of the swelling of the corresponding end battery cell without increasing the force applied onto the end plate. Such a configuration for the endplate ensures optimal mechanical support of the corresponding end battery cell while allowing permissiveness as to swelling of the end battery cell during its life cycle. This allows for enhancement of the battery cells holding force and the resistant force, so as to prevent slippage between the stacked surfaces of the battery module components, while allowing absorption of the expansion of the battery cells thickness over its lifetime.

In a preferred embodiment, the battery cell array further comprises a plurality of thermal insulation pads and a plurality of frames, the thermal insulation pads being inserted between the battery cells and separating the battery cells from each other in the longitudinal direction, each thermal insulation pad being composed of a material deformable by compression, the number of said frames being equal to the number of thermal insulation pads, each frame being arranged between two battery cells and being perforated with an opening, said opening being configured to accommodate one of the thermal insulation pads, each thermal insulation pad being fitted into the opening of one of the frames.

Such a configuration of the frames and the thermal insulation pads (which are fitted into the openings of the frames) allows for an increase in the initial compressive force onto the battery cells while reserving a sufficient compression margin of the thermal insulation pads for swelling of the battery cells over the cell's entire life. Indeed, by virtue of their fit within the respective openings of the frames, the thermal insulation pads are compressed over the battery cell's life (and expansion) and accommodate said expansion of the cells in their compressed space with much lower increase of the tension on the lateral plates of the cage. This allows enhancing of the battery cells holding force and the resistant force which prevents slippage between the stacked surfaces of the battery module components, thereby providing higher mechanical stiffness and assembly processability of the battery module.

In a particular embodiment of the invention, each thermal insulation pad is a rectangular-shaped flexible plate.

In a particular embodiment of the invention, the thickness of each thermal insulation pad is greater than the thickness of the corresponding frame into which it is fitted, the thickness being measured in the longitudinal direction.

In a preferred embodiment, each frame is provided with a pair of undercut rims on at least one of the edges of said frame, the two undercut rims of said pair of undercut rims extending on either side of the opening of the frame in the longitudinal direction, each undercut rim being configured to grip a corresponding adjacent battery cell at one of the edges of said battery cell. Such undercut rims provided on the edges of the frames allow for the prevention of the battery cells slipping away in excessive load conditions, for example shock, vibrations, and side pole crashes, while reinforcing the holding strength of the battery cells.

In a particular embodiment of the invention, each frame is a rectangular-shaped plastic frame made from a plastic plate.

In another particular embodiment of the invention, said opening is a rectangular-shaped opening which extends at the centre of the corresponding frame.

In a particular embodiment of the invention, the battery cells are prismatic battery cells.

In a preferred embodiment, at least one of said two end plates is provided with at least one, preferably two, side undercut rim(s) on its inner face, said at least one side undercut rim extending along an inner side edge of the end plate and being configured to wrap the corresponding end battery cell at one of the side edges of said battery cell. Such a side undercut rim allows for the prevention of the corresponding end battery cell slipping away in excessive load conditions, for example shock, vibrations, and side pole crashes, while reinforcing the holding strength of the battery cell.

In a particular embodiment of the invention, the battery cell array further comprises two electrical insulation sheets each arranged at a respective end of the stack of battery cells, each of said two end plates covering a respective electrical insulation sheet.

The above-mentioned embodiments can be combined.

According to a second aspect of the invention, there is also provided an end plate for a cage of a battery module, said end plate being intended to face an end battery cell of the battery module, the end plate being provided with an inner recess on its inner face, said inner recess being intended to face said end battery cell and being configured to accommodate swelling of said end battery cell.

Such an inner recess enables accommodation of the swelling of the corresponding end battery cell without increasing the force applied onto the end plate. Such a configuration for the endplate ensures optimal mechanical support of the corresponding end battery cell while allowing permissiveness as to swelling of the end battery cell during its life cycle.

In a preferred embodiment, said inner recess has concave shape and extends inwardly towards the outer face of the end plate.

In a particular embodiment of the invention, said inner recess has a vertical symmetry plane and a horizontal symmetry plane and the concave shape of said inner recess gradually changes its depth with the deepest peak at the centre of the inner recess, said centre being at the intersection of said vertical and horizontal symmetry planes.

According to a third aspect of the invention, there is also provided a method for assembling such a battery module, as described above, the method comprising the steps of:
- providing the two end plates of the cage;
- stacking, along the longitudinal direction, the plurality of battery cells, in such a way that the two end plates of the cage enclose the battery cell array in the longitudinal direction;
- providing the two lateral plates of the cage and connecting the two lateral plates at both ends of the end plates.

In a preferred embodiment, the stacking step further comprises stacking the plurality of sets of frames and thermal insulation pads, in such a way that each set, formed of a frame and a thermal insulation pad, separates two battery cells from each other in the longitudinal direction.

In a particular embodiment of the invention, the stacking step comprises a phase of compressing each thermal insulation pad between the two adjacent battery cells, separated by said thermal insulation pad, by applying a longitudinal compression force onto the stack of battery cells along the longitudinal direction.

In a particular embodiment of the invention, the battery cell array further comprises two electrical insulation sheets, and the stacking step further comprises stacking the two electrical insulation sheets, in such a way that each electrical insulation sheet is arranged at a respective end of the stack of battery cells, each of the two end plates covering a respective electrical insulation sheet.

### BRIEF DESCRIPTION OF THE FIGURES

Other advantages and features of the invention will become more readily apparent from the following description of a specific embodiment of the invention. The specific embodiment of the present invention as set forth is given as a non-restrictive example only and represented in the accompanying drawings, in which:
- figure 1 is a perspective view of a battery module according to an embodiment of the present invention;
- figure 2 is an exploded perspective view of the battery module of figure 1, the battery module comprising two end plates and a battery cell array comprising several frames and several thermal insulation pads;
- figure 3 is a perspective view of the inner face of one of the end plates of figure 2;
- figure 4 is a perspective view of a set of one frame and one thermal insulation pad of figure 2;
- figure 5 is a view similar to that of figure 4, in which the thermal insulation pad has been omitted;
- figure 6 is a longitudinal cross-section of the battery module of figure 1, taken along the vertical plane Y-Z;
- figure 7 is a side view showing a detail of the battery module of figure 6;
- figure 8 is a longitudinal cross-section of the battery module of figure 1, taken along the horizontal plane X-Y;
- figure 9 is a top view showing a detail of the battery module of figure 8;
- figure 10 is a top view showing another detail of the battery module of figure 8;
- figure 11 is a view similar to that of figure 6, showing the evolution of the battery module over its life; and
- figure 12 is a view similar to that of figure 8, showing the evolution of the battery module over its life.

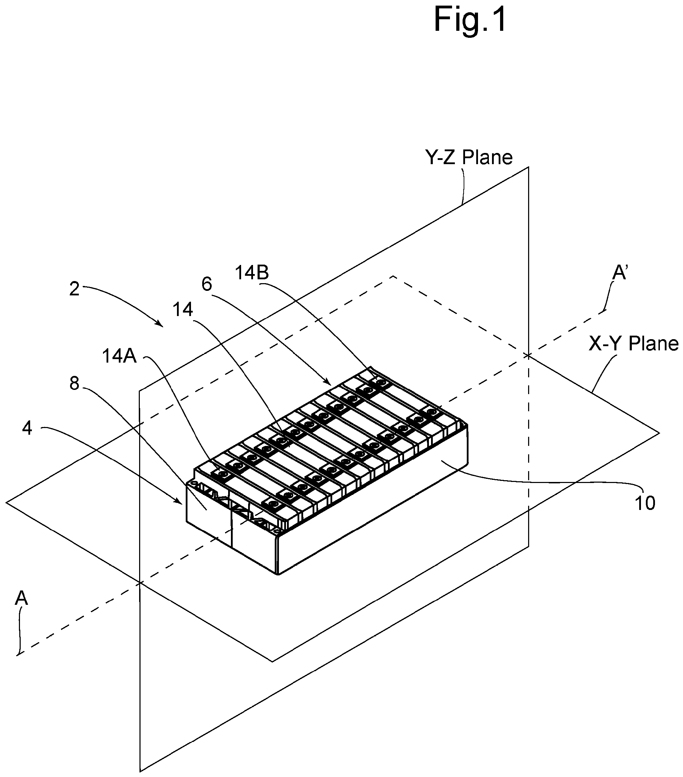

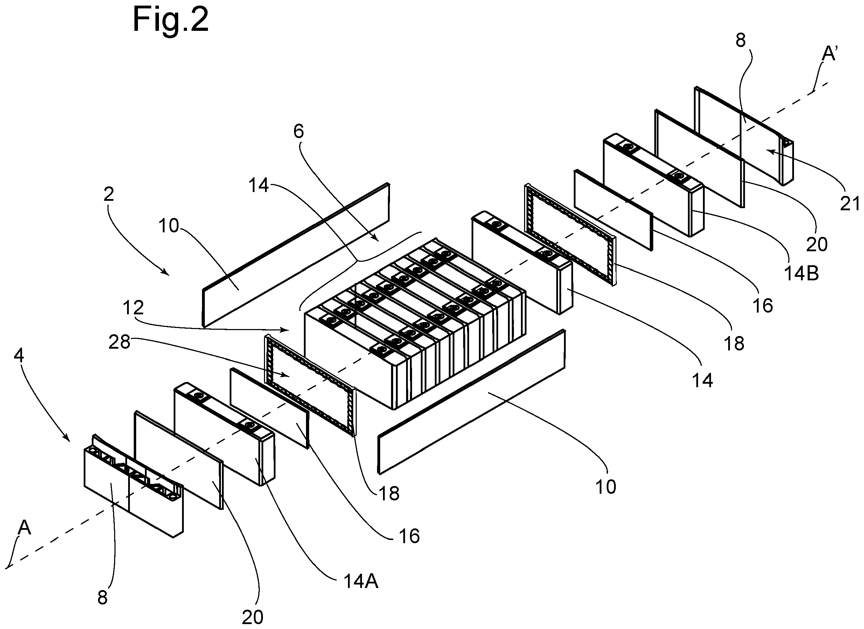

Corresponding reference numerals refer to the same or corresponding parts in each of the figures. In figures 1 and 2 an orthonormal frame **X-Y-Z** is shown. In the following description, the vertical direction designates the direction parallel to the **Z** axis, and the horizontal direction designates any direction perpendicular to the vertical direction, in other words any direction contained in the **X-Y** plane.

### DETAILED DESCRIPTION OF PREFERRED EMBODIMENTS

With reference to Figures 1, 2, 6, 8, 11 and 12, a battery module **2** comprises a cage **4** and a battery cell array **6** held within said cage **4.** The cage **4** comprises two end plates **8** and two lateral plates **10** connecting the end plates **8** at both ends. The end plates **8** and the lateral plates **10** are for example joined by welding. The cage **4** typically has a rectangular box shape delimiting a rectangular parallelepiped housing **12,** the end plates **8** being shorter in length than the lateral plates **10.** In other words, the two end plates **8** extend in vertical planes substantially parallel to each other (and parallel to the plane **X-Z** in Figures 1 and 2), and the two lateral plates **10** extend in vertical planes substantially parallel to each other (and parallel to the plane **Y-Z** in Figures 1 and 2) and perpendicular to the extension planes of the end plates **8.**

The battery cell array **6** is arranged within the housing **12** and comprises several battery cells **14** stacked along a longitudinal direction **A-A',** several thermal insulation pads **16,** several frames **18.** Preferably, the battery cell array **6** further comprises two electrical insulation sheets **20.** The longitudinal direction **A-A'** extends along the axis Y in Figures 1 and 2. The battery cells **14** are typically (but not limited to) prismatic battery cells. The battery cells **14** form a stack of battery cells, each electrical insulation sheet **20** being arranged at a respective end of the stack of battery cells. The thermal insulation pads **16** and the frames **18** are inserted between the battery cells **14** and separate the battery cells **14** from each other in the longitudinal direction **A-A'.** In other words, each set formed of a frame **18** and a thermal insulation pad **16** separates two battery cells **14** from each other in the longitudinal direction **A-A'.** The number of frames **18** is therefore equal to the number of thermal insulation pads **16,** said number being for example equal to eleven in the particular embodiment shown in Figures 1, 2, 6, 8, 11 and 12.

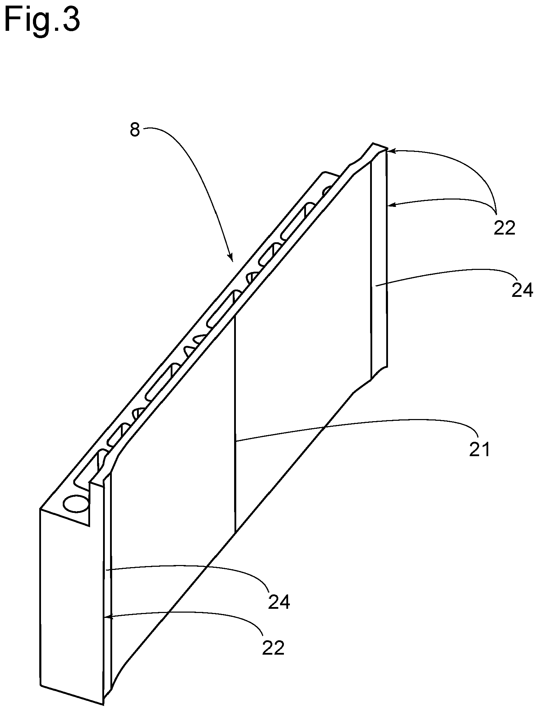

The two end plates **8** of the cage **4** enclose the battery cell array **6** in the longitudinal direction **A-A'** (the two lateral plates **10** enclosing the battery cell array **6** in the direction extending along the **X** axis in Figures 1 and 2), each end plate **8** covering a respective electrical insulation sheet **20.** Preferably, as shown in Figure 3, the inner face (i.e. the face extending inside the battery module **2**) of each end plate **8** is provided with an inner recess **21.** As shown in Figure 2, each inner recess **21** faces a corresponding end battery cell **14A, 14B** and is configured to accommodate swelling of said end battery cell **14A, 14B** (through a mechanical deformation of the corresponding electrical insulation sheet **20** arranged between the end plate **8** and the end battery cell **14A, 14B**). Each inner recess **21** is an empty space of a concave shape, extending inwardly towards the outer face (i.e. towards the face extending outside the battery module **2**) of the corresponding end plate **8.** Each inner recess **21** has a vertical symmetry plane and a horizontal symmetry plane (said planes being not illustrated in the figures). The concave shape of each inner recess **21** gradually changes its depth with the deepest peak at the centre of the inner recess **21,** said centre being at the intersection of said vertical and horizontal symmetry planes.

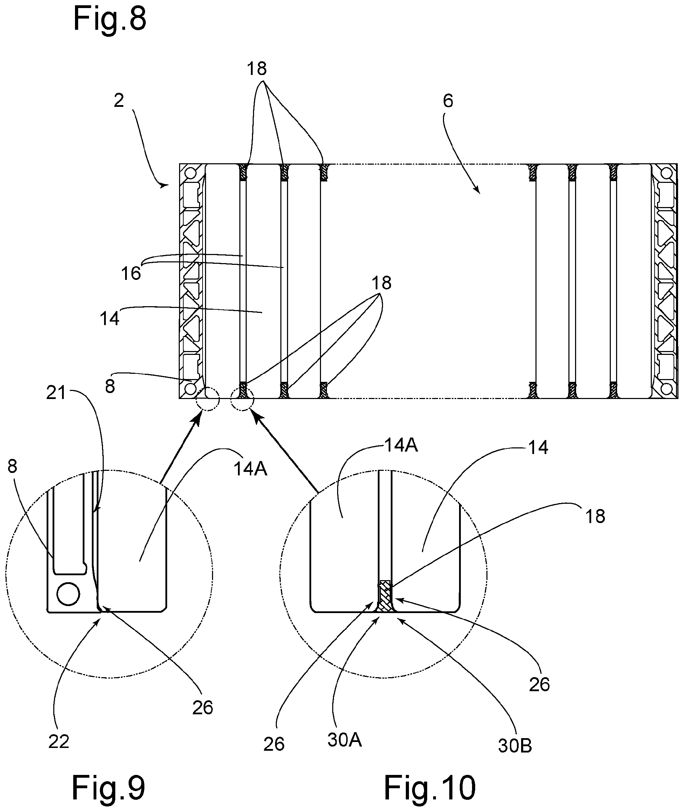

Preferably, as shown in Figure 3, the inner face of each end plate **8** is further provided with two side undercut rims **22.** Each side undercut rim **22** extends along an inner side edge **24** of the corresponding end plate **8,** preferably along the entire length of the inner side edge **24** of said end plate **8.** For each end plate **8,** the two side undercut rims **22** extend on two opposite lateral sides of the end plate **8.** As shown in Figure 9, each side undercut rim **22** is configured to wrap the corresponding end battery cell **14A, 14B** at one of the side edges **26** of said battery cell **14A, 14B.**

Each battery cell **14** typically has a rectangular box shape whose main extension vertical plane is perpendicular to the longitudinal direction **A-A'** (and parallel to the **X-Z** plane in Figures 1 and 2). The thickness of each battery cell **14** is measured in said longitudinal direction **A-A'.**

Each thermal insulation pad **16** is arranged between two battery cells **14** and is composed of a material deformable by compression (such a material deformable by compression being, for example, a composite sheet of woven glass fibre impregnated with perforated plastic). Each thermal insulation pad **16** typically has a rectangular box shape whose main extension vertical plane is perpendicular to the longitudinal direction **A-A'** (and parallel to the **X-Z** plane in Figures 1 and 2). The thickness of each thermal insulation pad **16** is measured in the longitudinal direction **A-A'.** Each thermal insulation pad **16** is for example a rectangular-shaped flexible plate.

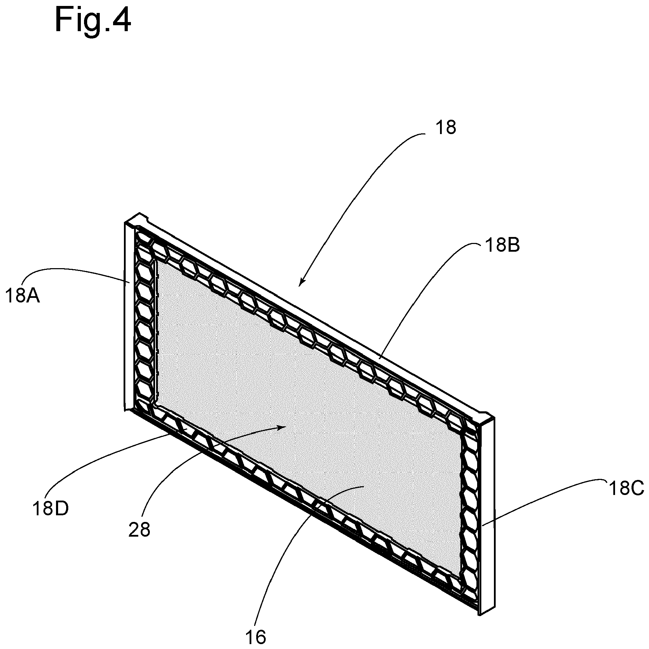

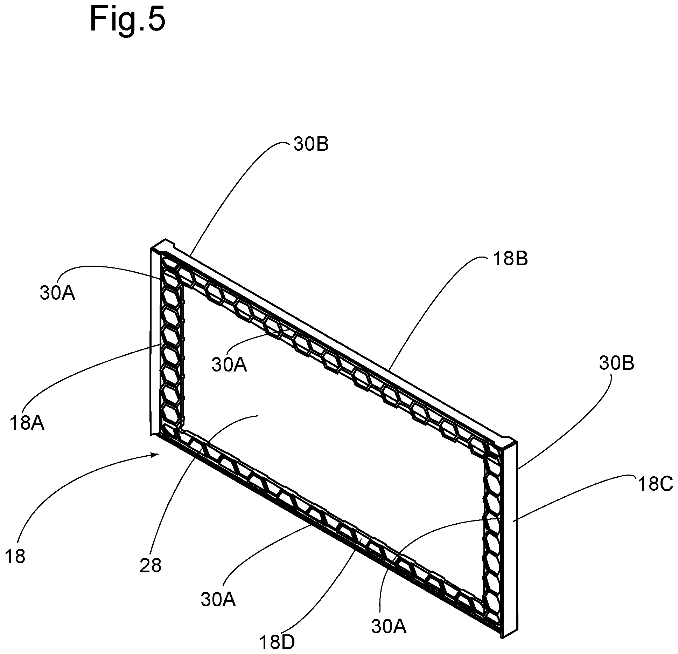

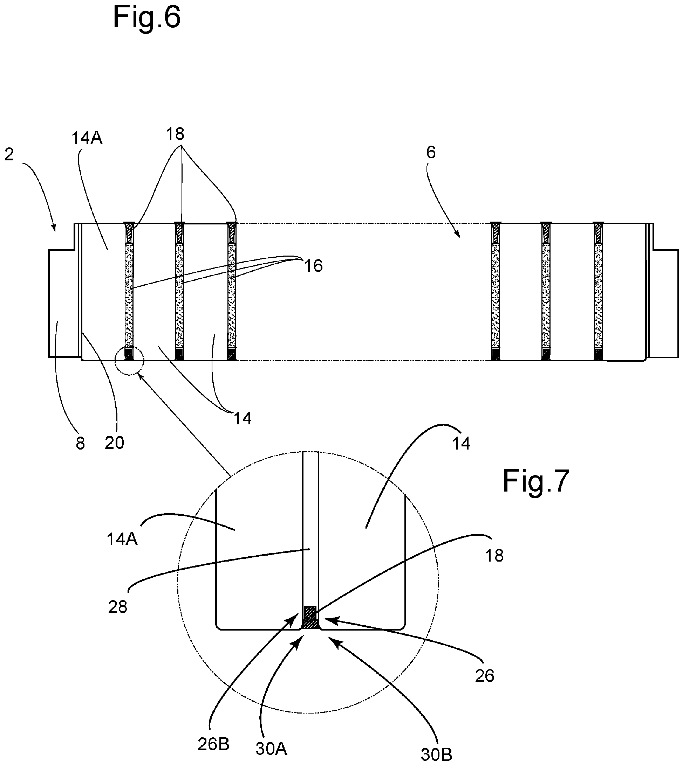

Each frame **18** is arranged between two battery cells **14.** As shown in Figure 5, each frame **18** is perforated with an opening **28** (typically a central rectangular opening **28** which extends at the centre of said frame **18**) which is configured to accommodate one of the thermal insulation pads **16.** Each frame **18** typically has a rectangular shape whose main extension vertical plane is perpendicular to the longitudinal direction **A-A'** (and parallel to the **X-Z** plane in Figures 1 and 2). The thickness of each frame **18** is measured in the longitudinal direction **A-A'.** Each frame **18** is for example a rectangular-shaped plastic frame made from a plastic plate. As shown in Figure 4, each thermal insulation pad **16** is fitted into the opening **28** of one of the frames **18** (with the thickness of the thermal insulation pad **16** being preferably substantially equal to that of the corresponding frame **18** into which it is fitted, as illustrated in Figures 4 and 6 for example). According to a particular embodiment, the initial thickness of each thermal insulation pad **16** is greater than the thickness of the corresponding frame **18** into which it is fitted (which means that each thermal insulation pad **16** is initially compressed by its two adjacent battery cells **14** so as to have the final thickness of the pad **16** reach that the thickness of the frame **18,** as described herein below). Indeed, each thermal insulation pad **16** has some margin in its initial thickness (excessive thickness) for being compressed once positioned in the cage **4** with an initial compression force generated by the cage **4.**

Preferably, as shown in Figures 4 and 5, each frame **18** is provided with a pair of undercut rims **30A, 30B** on at least one of the edges **18A, 18B, 18C, 18D** of said frame **18** (preferably with four pairs of undercut rims **30A, 30B** on the four edges **18A, 18B, 18C, 18D** of the frame **18,** as represented in Figures 4 and 5). The two undercut rims **30A, 30B** of each pair of undercut rims extend on either side of the opening **28** of the corresponding frame **18** in the longitudinal direction **A-A'.** Preferably, each undercut rim **30A, 30B** extends along the entire length of the corresponding edge **18A, 18B, 18C, 18D** of the frame **18.** As shown in Figures 7 and 10, each undercut rim **30A, 30B** is configured to grip a corresponding adjacent battery cell **14** at one of the edges **26 of said battery cell 14.** Each battery cell **14** is thereby held by gripping by at least one (in the case of the end battery cells **14A, 14B)** or two (in the case of the intermediate battery cells **14**) frame(s) **18.** In the case of the end battery cells **14A, 14B,** each end battery cell **14A, 14B** is held by the undercut rims **30A, 30B** of one frame **18** on the one hand, and by the side undercut rims **22** of the corresponding end plate **8** on the other hand.

The electrical insulation sheets **20** aim to electrically insulate the battery cells enclosures (i.e. can and top cover of said enclosures) from the positive and negative poles of the battery module **2,** and thus avoiding corrosion and risks of short circuits within said battery module **2.** Each electrical insulation sheet **20** is for example a rectangular-shaped plate made from an electrically insulating material.

A method for assembling the battery module **2** according to the invention is herein described.

The method comprises a first step of providing the two end plates **8** of the cage **4.** The method further comprises a second step of stacking the battery cells **14,** the sets of frames **18** and thermal insulation pads **16,** and the two electrical insulation sheets **20,** along the longitudinal direction **A-A'.** Said stacking step is completed in such a way that each set, formed of a frame **18** and a thermal insulation pad **16,** separates two battery cells **14** from each other in the longitudinal direction **A-A',** each electrical insulation sheet **20** being arranged at a respective end of the stack of battery cells, and the two end plates **8** of the cage **4** enclosing the battery cell array **6** in the longitudinal direction **A-A'.** Each end plate **8** thus covers a respective electrical insulation sheet **20,** the side undercut rims **22** of the end plate **8** wrapping the corresponding end battery cell **14A, 14B** at one of the side edges **26** of said battery cell **14A, 14B.** During this stacking step, the battery cells **14** and the frames **18** are in close contact at their edges (the battery cells **14** being held by gripping by the undercut rims **30A, 30B** of the frames **18**).

In the above-mentioned embodiment wherein the initial thickness of each thermal insulation pad **16** is greater than the thickness of the corresponding frame **18** into which it is fitted, the stacking step comprises a phase of compressing each thermal insulation pad **16** between the two adjacent battery cells **14,** separated by said thermal insulation pad **16,** by applying a longitudinal compression force onto the stack of battery cells along the longitudinal direction A-A'. The battery cells **14** thus get pushed to each other by the two end plates **8** of the cage **4.** A reactive compressive force is generated by the thermal insulation pads **16** onto the battery cells **14,** to apply initial compressive stress on those battery cells **14** (to be more precise, to the electrodes inside the battery cells cans) for proper contact between the battery cells electrodes, which is critical for a stable functioning of the battery cells **14.**

The method finally comprises a third step of providing the two lateral plates **10** of the cage **4** and connecting said lateral plates **10** at both ends of the end plates **8,** for example by welding. In this way, the two lateral plates **10** enclose the battery cell array **6** in a direction perpendicular to the longitudinal direction **A-A'** and parallel to the **X-Y** horizontal plane.

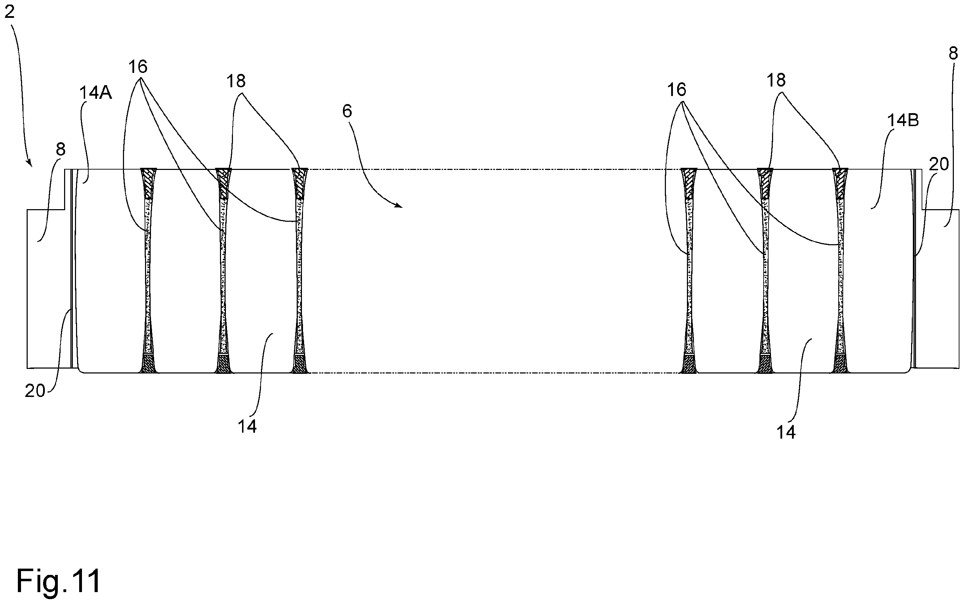

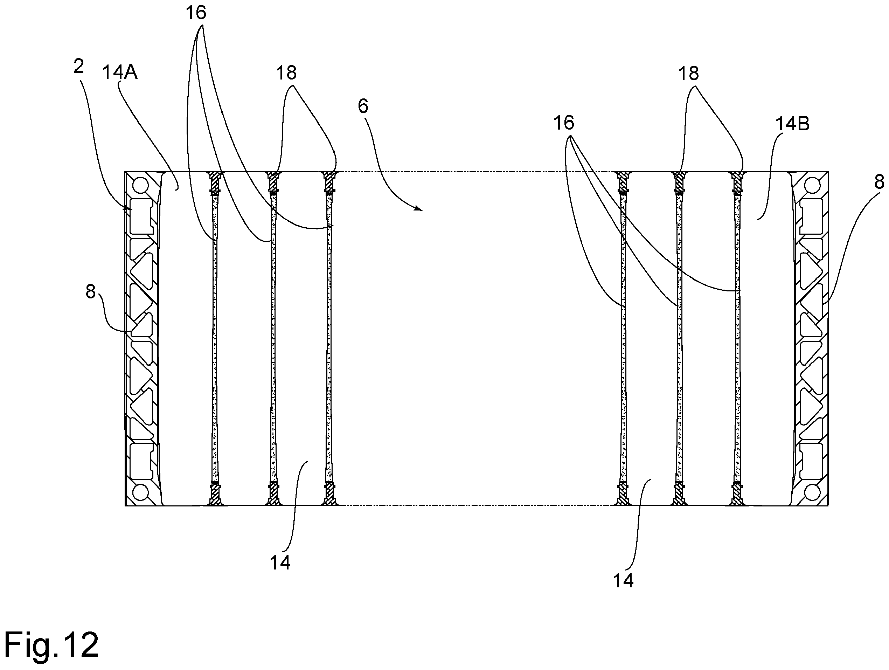

The operation of the battery module **2** according to the invention will herein be described, with reference to Figures 11 and 12. During operation and over the course of their lifetime, each battery cell **14** tends to expand and swell, notably in the longitudinal direction **A-A',** due to thermal behaviour and gas release within the battery cell **14.** Consequently, as shown in Figures 11 and 12, the thermal insulation pads **16** are compressed within their respective openings **28** and accommodate the expansion of the battery cells **14** in their compressed space, thereby resulting in a lower increase of tension on the lateral plates **10.** The inner recess **21** provided on the inner face of each end plate **8** of the cage **4** works to accommodate the swelling expansions of the end battery cells **14A, 14B** without increasing the force on the end plate **8.**

## Claims

1. A battery module (2) comprising a cage (4) and a battery cell array (6) held within said cage (4), the battery cell array (6) comprising a plurality of battery cells (14, 14A, 14B) stacked along a longitudinal direction (A-A') and thereby forming a stack of battery cells, the cage (4) comprising two end plates (8) and two lateral plates (10) connecting said end plates (8) at both ends, the two end plates (8) enclosing the battery cell array (6) in the longitudinal direction (A-A'),
**characterized in that** at least one of the two end plates (8) is provided with an inner recess (21) on its inner face, said inner recess (21) facing the corresponding end battery cell (14A, 14B) and being configured to accommodate swelling of said end battery cell (14A, 14B).

2. The battery module (2) according to claim 1, wherein the battery cell array (6) further comprises a plurality of thermal insulation pads (16) and a plurality of frames (18), the thermal insulation pads (16) being inserted between the battery cells (14, 14A, 14B) and separating the battery cells (14, 14A, 14B) from each other in the longitudinal direction (A-A'), each thermal insulation pad (16) being composed of a material deformable by compression, the number of said frames (18) being equal to the number of thermal insulation pads (16), each frame (18) being arranged between two battery cells (14, 14A, 14B) and being perforated with an opening (28), said opening (28) being configured to accommodate one of the thermal insulation pads (16), each thermal insulation pad (16) being fitted into the opening (28) of one of the frames (18).

3. The battery module (2) according to claim 2, wherein each thermal insulation pad (16) is a rectangular-shaped flexible plate.

4. The battery module (2) according to claim 2 or 3, wherein the thickness of each thermal insulation pad (16) is greater than the thickness of the corresponding frame (18) into which it is fitted, the thickness being measured in the longitudinal direction (A-A').

5. The battery module (2) according to any one of claims 2 to 4, wherein each frame (18) is provided with a pair of undercut rims (30A, 30B) on at least one of the edges (18A, 18B, 18C, 18D) of said frame (18), the two undercut rims (30A, 30B) extending on either side of the opening (28) of the frame (18) in the longitudinal direction (A-A'), each undercut rim (30A, 30B) being configured to grip a corresponding adjacent battery cell (14, 14A, 14B) at one of the edges (26) of said battery cell (14, 14A, 14B).

6. The battery module (2) according to any one of claims 2 to 5, wherein the opening (28) is a rectangular-shaped opening which extends at the centre of the corresponding frame (18).

7. The battery module (2) according to any one of claims 2 to 6, wherein each frame (18) is a rectangular-shaped plastic frame made from a plastic plate.

8. The battery module (2) according to any one of the preceding claims, wherein at least one of the two end plates (8) is provided with at least one, preferably two, side undercut rim(s) (22) on its inner face, said at least one side undercut rim (22) extending along an inner side edge (24) of the end plate (8) and being configured to wrap the corresponding end battery cell (14A, 14B) at one of the side edges (26) of said end battery cell (14A, 14B).

9. The battery module (2) according to any one of the preceding claims, wherein the battery cell array (6) further comprises two electrical insulation sheets (20) each arranged at a respective end of the stack of battery cells, each of said two end plates (8) covering a respective electrical insulation sheet (20).

10. End plate (8) for a cage (4) of a battery module (2), said end plate (8) being intended to face an end battery cell (14A, 14B) of the battery module (2), **characterized in that** the end plate (8) is provided with an inner recess (21) on its inner face, said inner recess (21) being intended to face said end battery cell (14A, 14B) and being configured to accommodate swelling of said end battery cell (14A, 14B).

11. End plate (8) according to claim 10, wherein said inner recess (21) has concave shape and extends inwardly towards the outer face of the end plate (8).

12. Method for assembling a battery module (2) according to any one of claims 1 to 9, **characterized in that** the method comprises the steps of:
- providing the two end plates (8) of the cage (4);
- stacking, along the longitudinal direction (A-A'), the plurality of battery cells (14, 14A, 14B), in such a way that the two end plates (8) of the cage (4) enclose the battery cell array (6) in the longitudinal direction (A-A');
- providing the two lateral plates (10) of the cage (4) and connecting said lateral plates (10) at both ends of the end plates (8).

13. Method according to claim 12 when the battery module (2) is according to claim 2, wherein the stacking step further comprises stacking the plurality of sets of frames (18) and thermal insulation pads (16), in such a way that each set, formed of a frame (18) and a thermal insulation pad (16), separates two battery cells (14, 14A, 14B) from each other in the longitudinal direction (A-A').

14. Method according to claim 13, wherein the stacking step comprises a phase of compressing each thermal insulation pad (16) between the two adjacent battery cells (14, 14A, 14B) separated by said thermal insulation pad (16), by applying a longitudinal compression force onto the stack of battery cells along the longitudinal direction (A-A').
